# EUROPÄISCHE PATENTSCHRIFT

(11) **EP 1 237 756 B1**
(45) Veröffentlichungstag und Bekanntmachung des Hinweises auf die Patenterteilung: **02.05.2003**
(21) Anmeldenummer: 00990523.3
(22) Anmeldetag: 12.12.2000
(51) Int. Cl.: B60R 21/01, B60N 2/28

(54) **INSASSENSCHUTZSYSTEM MIT EINEM KINDERSITZ FÜR EIN KRAFTFAHRZEUG**
OCCUPANT-PROTECTION SYSTEM FOR A MOTOR VEHICLE, COMPRISING A CHILD'S SEAT
SYSTEME DE PROTECTION DES OCCUPANTS, COMPORTANT UN SIEGE ENFANT, POUR UN VEHICULE AUTOMOBILE

(30) Priorität: 14.12.1999 DE 19960248
(43) Veröffentlichungstag der Anmeldung: 11.09.2002
(73) Patentinhaber: SIEMENS AKTIENGESELLSCHAFT, 80333 München (DE)
(72) Erfinder: KRAFT, Ekkehard, 97282 Retzstadt (DE); SWART, Marten, 93083 Obertraubling (DE)
(86) Internationale Anmeldenummer: DE0004408
(87) Internationale Veröffentlichungsnummer: WO01044022

(56) Entgegenhaltungen:
- EP-A- 0 819 566
- DE-U- 29 903 414

## Beschreibung

Die Erfindung betrifft ein Insassenschutzsystem mit einem Kindersitz für ein Kraftfahrzeug gemäß dem Oberbegriff des Anspruchs 1. Ein derardiges Insassen schutzsystem ist aus des EP-A-0819566 bekannt.
Im Insassenschutz von Kraftfahrzeugen kommt auch dem Schutz mitgeführter Kinder, insbesondere Kleinkinder, große Bedeutung zu. Es wurden Kindersitze entwickelt, die auf dem Beifahrersitz rückwärts zur Fahrtrichtung befestigt werden können, so daß sich ein auf dem Kindersitz sitzendes Kind in der Nähe der das Fahrzeug fahrenden Mutter oder des Vaters befindet, bei einem Aufprall des Fahrzeugs aber dennoch insbesondere durch die Rücklehne des Kindersitzes selbst geschützt ist. Ein Problem, daß sich bei solchen Kindersitzen stellt, ist, daß ein vor dem Beifahrersitz befindlicher Airbag nicht ausgelöst werden darf, wenn sich der Kindersitz auf dem Beifahrersitz befindet. Ein Auslösen des Airbags könnte für das Kind eine zusätzliche Verletzungsgefahr darstellen.

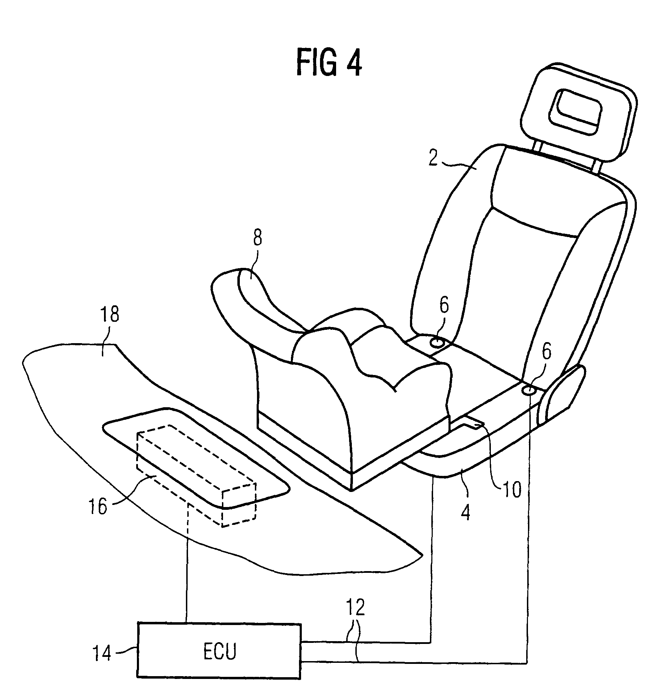

Zur Lösung dieses Problems wird in der gattungsbildenden US 5,468,014, der die beigefügte Figur 4 weitgehend entnommen ist, vorgeschlagen, mittels eines Sensors festzustellen, ob bzw. daß ein Kindersitz an einer verriegelbaren Rasteinrichtung befestigt ist und bei verriegelter Rasteinrichtung das Auslösen des den Beifahrersitz zugeordneten Airbags zu deaktivieren. Gemäß Fig. 4 sind auf einem Beifahrersitz 2 im rückwärtigsten Bereich von dessen Sitzkissen 4 Rasteinrichtungen 6 zur Aufnahme von an einem Kindersitz 8 ausgebildeten Befestigungsbauteilen 10 vorgesehen. Es versteht sich, daß die Rasteinrichtungen 6 starr mit dem Gestell des Beifahrersitzes 2 verbunden sind und die Befestigungsbauteile 10 starr mit einem Grundgestell des als Sicherheitssitz ausgebildeten Kindersitzes 8 verbunden sind. In den Rasteinrichtungen 6 sind gemäß der vorgenannten US 5,468,014 nicht dargestellte Sensoren angeordnet, die über Leitungen 12 mit einem Steuergerät 14 (Electronic Control Unit) verbunden sind, über das eine Airbag-Einheit 16 angesteuert wird, die im Bereich vor dem Beifahrersitz 2 in der Schalttafel 18 des Kraftfahrzeugs untergebracht ist. Die nicht dargestellten, in den Rasteinrichtungen 6 aufgenommenen Sensoren können beispielsweise als Impulsgeber ausgebildet sein, wobei das Steuergerät 14 auf von ihnen erzeugte Impulse reagiert und eine Auslösung der Airbag-Einheit 16 sperrt. Des weiteren können die Sensoren derart ausgebildet sein, daß sie bei nicht einwandfreier Verrastung der Befestigungsbauteile 10 mit den Rasteinrichtungen 6 ein Signal aussenden, das in der Schalttafel eine Warnanzeige auslöst.

Eine andere Möglichkeit, ein Signal zur Airbag-Abschaltung zu erzeugen, besteht darin, im Beifahrersitz 2 Sende- und Empfangsmatten unterzubringen und im Kindersitz 8 einen Transponder unterzubringen, der auf ein Sendesignal mit einem Antwortsignal reagiert, das dann von der Empfangsmatte zu dem Steuergerät 14 übertragen wird und eine Sperrung des Airbags auslöst.

Der Erfindung liegt die Aufgabe zugrunde, ein gattungsgemäßes Insassenschutzsystem dahingehend weiterzubilden, daß bei einfacher Ausbildung ein besonders hohes Maß an Sicherheit gegen Fehlfunktionen erzielt wird.

Diese Aufgabe wird mit den Merkmalen des Hauptanspruchs gelöst.

Bei dem erfindungsgemäßen Insassenschutzsystem beeinflußt der Schaltzustand des Schalters die Wirksamkeit des elektrischen Funktionselements, über das wiederum die Funktionalität des Zond kreises derart beeinflußbar ist, daß der Airbag bei offenem Schalter über das dann wirksame elektrische Funktionselement nicht auslösbar ist.

Die Unteransprüche sind auf vorteilhafte Ausführungsformen und Weiterbildungen des erfindungsgemäßen Insassenschutzsystems gerichtet.

Die Erfindung wird im Folgenden anhand schematischer Zeichnungen beispielsweise und mit weiteren Einzelheiten erläutert.

Es stellen dar:
- Fig. 1: ein Blockschaltbild eines erfindungsgemäßen Insassenschutzsystems,
- Fig. 2 und 3: zwei unterschiedliche Stellungen eines Schalters, und
- Fig. 4: eine Prinzipanordnung eines bekannten Insassenschutzsystems, das weiter oben bereits erläutert wurde.

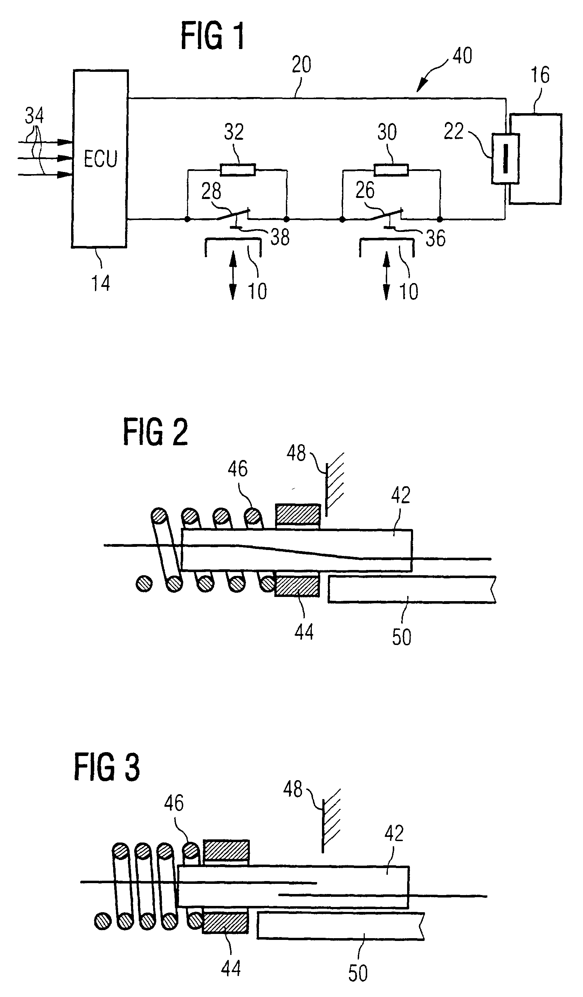

Gemäß Fig. 1 ist ein Steuergerät 14 über eine Leitung 20 mit einer Zündpille 22 verbunden, die in der Airbag-Einheit 16 gemäß Fig. 4 angeordnet ist. Die Zündpille 22 ist über eine Reihenschaltung aus zwei Schaltern 26 und 28 mit dem Steuergerat 14 verbunden. Parallel zu den Schaltern 26 und 28 liegen Widerstände 30 und 32. Der beschriebene Stromkreis bildet einen Zündkreis 40 zum Zünden der Zündpille 22. Das Steuergerät 14 verbindet auf an seinen Eingängen 34 liegende Signale hin den Zündkreis 40 mit einer nicht dargestellten Spannungsquelle, beispielsweise einem Zündkondensator. Die Signale werden beispielsweise von Verzögerungssensoren erzeugt und im Steuergerät ausgewertet.

Die Schalter 26 und 28, die innerhalb der Rasteinrichtungen 6 der Fig. 4 angeordnet sind, werden über Stößel 36 und 38 geöffnet, die von an dem am Kindersitz 8 (Fig. 4) angebrachten Befestigungsbauteilen 10 bei deren Einschieben in die Rasteinrichtungen 6 betätigt werden.

Die Funktion der beschriebenen Anordnung ist folgende:
In dem dargestellten Zustand, in dem die Schalter 26 und 28 geschlossen sind, ist der Kindersitz 8 nicht an dem Beifahrersitz 2 befestigt, d.h. ragen die Befestigungsbauteile 10 nicht in die Rasteinrichtungen 6 ein. Die dargestellte Schaltung funktioniert dann in an sich bekannter Weise wie eine übliche Schaltung zur Auslösung eines Airbags, d.h. bei Verbinden der Zündpille 22 mit einer entsprechenden, nicht dargestellten Spannungsquelle, die beispielsweise in dem Steuergerät 14 enthalten ist, wird der Zündpille 22 soviel Leistung zugeführt, daß pyrotechnisches Material zum Aufblasen des nicht dargestellten Airbags gezündet wird.

Wenn der Kindersitz 8 am Beifahrersitz 2 befestigt wird, d.h. die Befestigungsbauteile 10 in die Rasteinrichtungen 6 eingeschoben werden, werden die Stößel 36 und 38 betätigt, so daß die Schalter 26 und 28 öffnen und die Reihenschaltung aus den Widerständen 30 und 32 wirksam wird. Dadurch vergrößert sich der Widerstand, über den die Zündpille 22 mit der Zündenergiequelle verbunden ist, wodurch die der Zündpille 22 zugeführte Leistung nicht mehr für deren Zündung ausreicht. Es ist somit ein hohes Maß an Sicherheit gegen Fehlauslösungen bei am Beifahrersitz 2 angebrachtem Kindersitz 8 geschaffen. Der Widerstand des in Fig. 1 insgesamt mit 40 bezeichneten Zündkreises kann in an sich bekannter Weise vom Steuergerät 14 aus zu Diagnosezwecken ständig erfaßt werden, so daß vom Steuergerät 14 ein Zustand diagnostiziert werden kann, bei dem nur einer der Schalter 26 und 28 geschlossen ist. Dies kann für eine dem Fahrer angezeigte Fehlermeldung genutzt werden, da es auf einen gefährlichen Zustand hindeutet, in dem der Kindersitz 8 nur unzureichend an dem Beifahrersitz 2 befestigt ist.

Mit der dargestellten Schaltung wird somit neben einer Unterbindung der Auslösbarkeit des Airbags auch eine Diagnose der einwandfreien Befestigung des Kindersitzes erzielt.

Parallel zu dem Schaltern 26 und 28 müssen nicht zwingend die als Überbrückungswiderstände mit im dargestellten Beispiel jeweils etwa 1 kΩ eingezeichneten Widerstände 30 und 32 geschaltet sein; die Bauteile 30 und 32 könnten auch Induktivitäten oder Kapazitäten sein, deren von Ausgängen des Steuergeräts 14 her erfaßbare elektrische Wirksamkeit sich mit der Stellung der Schalter 26 und 28 ändert.

Für die anhand der Fig. 1 geschilderte mehrfache redundante Funktionssicherheit des Systems ist eine möglichst einfache, aber dennoch langzeithaltbare und funktionssichere Ausbildung der Schalter 26 und 28 und deren Zusammenwirken mit den Befestigungsbauteilen 10 vorteilhaft.

Die Fig. 2 und 3 stellen zwei verschiedene Schaltzustände einer besonders vorteilhaften Ausbildung der Schalter dar.

Gemäß Fig. 2 weist jeder der Schalter einen Reed-Kontakt 42 auf, an dem ein Dauermagnet 44 verschiebbar angeordnet ist. Der Dauermagnet 44 wird von einer Feder 46 gegen einen Anschlag 48 elastisch vorgespannt. In der am Anschlag 48 anliegenden Stellung des Dauermagneten 44 ist der Reed-Kontakt 42 geschlossen. Ein Betätigungsteil 50, das mit dem Befestigungsbauteil 10 (Fig. 1) zusammenwirkt, wird bei dem Einschieben eines Befestigungsbauteils 10 (Fig. 4 oder Fig. 1) in die zugehörige Rasteinrichtung 6 (Fig. 1) aus der Stellung gemäß Fig. 2 in die Stellung der Fig. 3 verschoben und verschiebt dabei den Dauermagnet 44 gegen die Kraft der Feder 46 nach links, so daß der Reed-Kontakt 42 öffnet.

Die Anordnung der Fig. 2 und 3 kann beispielsweise innerhalb einer Drehfalle angeordnet sein, die innerhalb der Rasteinrichtungen 6 angeordnet ist und den Kindersitz verriegelt. Die Erfindung eignet sich besonders gut zur Anwendung bei modernen Kindersitzen, wie sie unter der Bezeichnung "Isofix-Kindersitz" bekannt geworden sind, die einfach handhabbar und durch entsprechende mechanische Verbindungen sicher mit dem Beifahrersitz bzw. am Fahrzeug befestigten Rasteinrichtungen verrastbar sind. Es versteht sich, daß das Betätigungsteil 50 auch unmittelbar durch das Befestigungsbauteil 10 gebildet sein kann und daß andere Schalter als mit Reed-Kontakten arbeitende Schalter verwendet werden können.

Vorteilhafterweise ist die Anordnung der Fig. 2 und 3 derart, daß der Dauermagnet 44 erst dann in die Stellung gemäß Fig. 3 bewegt ist, in der der Reed-Kontakt 42 geöffnet ist, wenn eine Rasteinrichtung zur mechanischen Verriegelung des Befestigungsbauteils 10 in der Rasteinrichtung 6 eingerastet ist, beispielsweise eine Drehfalle, ein Riegelzapfen usw. Das Betätigungsteil 50 wird daher vorteilhafterweise von einem Verriegelungsteil betätigt. Es versteht sich, daß die Rasteinrichtung in diesem Fall vorteilhafterweise derart aufgebaut ist, daß sie nur verrastbar ist, wenn sich ein Befestigungsbauteil in der Rasteinrichtung befindet und nicht einfach durch Manipulation in eine Riegelstellung bewegbar ist.

Die Erfindung ist überall dort einsetzbar, wo das Auslösen eines Airbags zuverlässig verhindert werden soll, wenn ein durch das Auslösen gefärdetes Objekt im Fahrzeug befestigt wird. Dabei können eine oder mehrere Befestigungen vorgesehen sein.

## Patentansprüche

1. Insassenschutzsystem für ein Kraftfahrzeug, enthaltend einen Zündkreis (40) mit einer Zündpille (22) für eine Airbag-Einheit (16), ein Steuergerät (14) zum Aktivieren der Zündpille (22), eine verriegelbare Rasteinrichtung (6) zum Befestigen eines Kindersitzes (8), und
eine Sensoreinrichtung, die einen bei verriegelter Rasteinrichtung (6) offenen Schalter (26, 28) und ein elektrisches Element (30, 32) enthält,
**dadurch gekennzeichnet,**
**daß** die Sensoreinrichtung bei verriegelter Rasteinrichtung eine Aktivierung der Zündpille (22) verhindert, wobei der Schalter (26, 28) und das elektrische Element (30, 32) parallel zueinander im Zündkreis (40) enthalten sind und bei offenem Schalter (26, 28) die Airbag-Einheit (16) über die dann geänderte elektrische Funktionalität der Parallelschaltung aus Schalter (26, 28) und elektrischem Element (30, 32) nicht auslösbar ist.

2. Insassenschutzsystem nach Anspruch 1, **dadurch gekennzeichnet, daß** das elektrische Element ein Widerstand (30, 32) ist.

3. Insassenschutzsystem nach Anspruch 2, **dadurch gekennzeichnet, daß** das Steuergerät (14) eine Diagnosefunktion zur Feststellung des elektrischen Widerstandes des Zündkreises (40) enthält.

4. Insassenschutzsystem nach Anspruch 3, **dadurch gekennzeichnet, daß** zwei Schalter (26, 28) mit jeweils parallel geschaltetem Widerstand (30, 32) in Reihe im Zündkreis (40) enthalten sind.

5. Insassenschutzsystem nach einem der Ansprüche 1 bis 4, **dadurch gekennzeichnet, daß** der Schalter einen Reed-Kontakt (42) enthält.

6. Insassenschutzsystem nach Anspruch 5, **dadurch gekennzeichnet, daß** die Rasteinrichtung einen Magneten (44) enthält, der bei eingebrachtem Kindersitz (8) in eine Stellung bewegt wird, in der der Reed-Kontakt (48) öffnet.

## Claims

1. Vehicle occupant protection system for a motor vehicle, containing an ignition circuit (40) with an igniter (22) for an airbag unit (16), a control unit (14) for activating the igniter (22),
an interlocking latching mechanism (6) for securing a child seat (8), and
a sensor facility which contains a switch (26, 28), which is open when the latching mechanism (6) is interlocked, and an electrical element (30, 32),
**characterised in that**
when the latching mechanism is interlocked the sensor facility prevents activation of the igniter (22), whereby the switch (26, 28) and the electrical element (30, 32) are contained parallel to one another in the ignition circuit (40), and that when the switch (26, 28) is open the airbag unit (16) is not capable of being triggered by way of the then changed electrical functionality of the parallel circuit comprising switch (26, 28) and electrical element (30, 32).

2. Vehicle occupant protection system according to Claim 1, **characterised in that** the electrical element is a resistor (30, 32).

3. Vehicle occupant protection system according to Claim 2, **characterised in that** the control unit (14) contains a diagnostic function for determining the electrical resistance of the ignition circuit (40).

4. Vehicle occupant protection system according to Claim 3, **characterised in that** two switches (26, 28), each with a respective resistor (30, 32) connected in parallel, are contained in series in the ignition circuit (40).

5. Vehicle occupant protection system according to one of Claims 1 to 4,
**characterised in that** the switch contains a reed contact (42).

6. Vehicle occupant protection system according to Claim 5, **characterised in that** the latching mechanism contains a magnet (44) which, when a child seat (8) is fitted, is moved into a position in which the reed contact (48) opens.

## Revendications

1. Système de protection des passagers d'un véhicule automobile, comprenant
un circuit d'allumage (40) comportant une amorce (22) pour une unité de coussin gonflable (16),
un appareil de commande (14) pour activer l'amorce (22),
un dispositif de blocage (6) verrouillable pour fixer un siège pour enfant (8), et
un dispositif détecteur qui comporte un interrupteur (26, 28), ouvert si le dispositif de blocage (6) est verrouillé, et un élément électrique(30, 32),
**caractérisé en ce que**
le dispositif détecteur empêche, si le dispositif de blocage (6) est verrouillé, une activation de l'amorce (22), l'interrupteur (26, 28) et l'élément électrique (30, 32) étant placés, en parallèle l'un par rapport à l'autre, dans le circuit d'allumage (40) et, si l'interrupteur (26, 28) est ouvert, l'unité de coussin gonflable (16) ne pouvant être déclenché par le processus de fonctionnement électrique, alors modifié, du circuit parallèle composé de l'interrupteur (26, 28) et de l'élément électrique (30, 32).

2. Système de protection des passagers suivant la revendication 1, **caractérisé en ce que** l'élément électrique est une résistance (30, 32).

3. Système de protection des passagers suivant la revendication 2, **caractérisé en ce que** l'appareil de commande (14) contient une fonction de diagnostic pour déterminer la résistance électrique du circuit d'allumage (40).

4. Système de protection des passagers suivant la revendication 3, **caractérisé en ce que** deux interrupteurs (26, 28), associés chacun à une résistance (30, 32) montée en parallèle, sont placés en série dans le circuit d'allumage (40).

5. Système de protection des passagers suivant l'une des revendications 1 à 4,
**caractérisé en ce que** l'interrupteur (26) comprend un contact en ampoule (42).

6. Système de protection des passagers suivant la revendications 5, **caractérisé en ce que** le dispositif de blocage comprend un aimant (44), qui, lorsque le siège pour enfant (8) est installé, est déplacé pour venir dans une position dans laquelle le contact en ampoule (42) est ouvert.
